# DEMANDE DE BREVET EUROPEEN

(11) **EP 0 995 544 A1**
(43) Date de publication de la demande: **26.04.2000**
(21) Numéro de dépôt: 99410138.4
(22) Date de dépôt: 18.10.1999
(51) Int. Cl.: B23Q 11/10

(54) **Dispositif de refroidissment de l'huile de coupe d'une machine-outil**

(30) Priorité: 21.10.1998 FR 9813342
(71) Demandeur: Service et Technique Mace Thierry, 74970 Marignier (FR)
(72) Inventeur: Mace, Thierry, 74970 Marignier (FR)
(74) Mandataire: Gasquet, Denis

(57) **Abrégé**

Dispositif de refroidissement (1) de l'huile de coupe d'une machine-outil (2) du type comportant des moyens de refroidissement, caractérisé en ce qu'il comporte des moyens de connexion amovibles destinés à permettre son branchement sur le circuit d'huile de coupe de la machine-outil (2) et son installation à l'extérieur de la machine outil (2).

## Description

La présente invention concerne un dispositif de refroidissement pour machine-outil qui est destiné à s'adapter à n'importe quelle machine-outil pour venir se brancher sur son circuit d'huile de coupe afin de permettre le refroidissement de l'huile de coupe de la machine.

Les machines-outils sont devenues au fil des années de plus en plus performantes grâce aux progrès technologiques. Elles permettent l'usinage de pièces de plus en plus complexes à des cadences élevées et avec des tolérances de plus en plus draconiennes. Toutefois, les machines-outils présentent des inconvénients dus à des problèmes de température de leur huile de coupe qui s'échauffe rapidement lors de l'usinage. En effet, une huile de coupe dont la température est supérieure à sa plage de fonctionnement optimum provoque des problèmes d'usure et de casse de l'outil et rend nécessaire un affûtage régulier de celui-ci de plus en plus fréquent.

Par ailleurs, une huile de coupe chaude empêche l'obtention d'un usinage précis et pose ainsi des problèmes lorsque la tolérance est fine pour une pièce, et ce, pour des raisons de dilatation des métaux.

On connaît dans l'art antérieur, des dispositifs de refroidissement de l'huile de coupe des machines-outils qui sont constitués par des organes de refroidissement, comme par exemple des thermoplongeurs, montés directement dans les bacs à huile des circuits d'huile de coupe des machines-outils. Ces dispositifs présentent toutefois des inconvénients et ne sont pas d'une efficacité suffisante pour permettre de réaliser en permanence un usinage avec de l'huile de coupe dont la température est contenue dans la plage de température optimum car ils ne disposent pas de suffisamment de temps pour abaisser sensiblement la température de l'huile. De plus, lors d'une interruption de la machine, ces dispositifs produisent en continuant à fonctionner un abaissement trop important de la température de l'huile de coupe et obligent lors de la remise en route de la machine à réchauffer l'huile en faisant tourner la machine à vide avant de pouvoir s'en servir.

De plus, ce type de dispositifs comprend des thermoplongeurs qui provoquent un échange de chaleur important à leur base, mais dont l'efficacité diminue rapidement le long de l'échangeur ne permettant pas d'abaisser suffisamment la température de l'huile de coupe de la machine-outil essentiellement lorsqu'elle travaille à des cadences élevées. Ainsi, les dispositifs actuels souffrent d'un manque d'efficacité chronique pour permettre un bon fonctionnement des machines outils actuelles

Ainsi, la présente invention a pour objectif de résoudre les problèmes précités à l'aide de moyens simples, efficaces, fiables, peu onéreux et faciles à mettre en oeuvre. Elle a pour objectif de permettre un refroidissement permanent et efficace de l'huile de coupe des machines-outils pour leur permettre de suivre des cadences élevées en évitant les problèmes d'usure des outils et de précision d'usinage dus à une température trop élevée de leur huile.

Ainsi, selon sa caractéristique principale, le dispositif de refroidissement de l'huile de coupe d'une machine-outil selon l'invention est du type comportant des moyens de refroidissement et est caractérisé en ce qu'il comporte des moyens de connexion amovibles destinés à permettre son branchement sur le circuit d'huile de coupe de la machine-outil et son installation à l'extérieur de la machine outil.

Selon une autre caractéristique du dispositif de refroidissement de l'huile de coupe d'une machine-outil selon l'invention, celui-ci est caractérisé en ce que les moyens de connexion amovibles sont constitués par une canalisation d'admission et une canalisation de sortie réalisées en matière flexible.

Selon une caractéristique complémentaire du dispositif de refroidissement d'huile de coupe de machine-outil, la canalisation d'admission est destinée à être reliée au bac de récupération d'huile de la machine-outil et la canalisation de sortie à l'admission de la pompe à huile de ladite machine-outil.

Selon une autre caractéristique de l'invention, le dispositif de refroidissement de l'huile de coupe d'une machine-outil est caractérisé en ce qu'il comporte au moins une enceinte de refroidissement à l'intérieur de laquelle sont disposés les moyens de refroidissement.

Selon le mode de réalisation préféré du dispositif de refroidissement de l'huile de coupe d'une machine-outil, celui-ci comporte deux enceintes de refroidissement par lesquelles l'huile de coupe passe successivement pour être refroidie.

Selon une caractéristique complémentaire du dispositif de refroidissement d'huile de coupe selon l'invention, les moyens de refroidissement sont réalisés par une ou plusieurs canalisations rigides disposées dans chaque enceinte et formant les circuits internes de refroidissement dans lesquels circulent des fluides de réfrigération.

Selon une variante d'exécution du dispositif de refroidissement d'huile de coupe, le ou les fluides de réfrigération sont constitués par de l'eau.

Par ailleurs, le dispositif de refroidissement d'huile de coupe des machines-outils selon l'invention, est caractérisé en ce qu'il comporte des moyens de régulation de la température susceptibles de commander la circulation du(des) fluide(s) de réfrigération à l'intérieur des circuits internes de refroidissements.

Selon cette variante, les moyens de régulation sont constitués par un thermostat disposé dans la ou les enceinte(s) de refroidissement et une électrovanne commandée par le thermostat destinée à gérer la circulation du fluide à l'intérieur du circuit de refroidissement.

D'autres caractéristiques et avantages de l'invention se dégageront de la description qui va suivre en regard des dessins annexés qui ne sont donnés qu'à titre d'exemples non limitatifs.

Les figures 1 à4 illustrent les modes de réalisation du dispositif de refroidissement de l'huile de coupe selon l'invention.

La figure 1 représente en perspective un mode de réalisation du dispositif de refroidissement disposé sur une machine outil.

La figure 2 illustre schématiquement en coupe transversale un premier mode de réalisation du dispositif de refroidissement.

La figure 3 illustre en perspective un deuxième mode de réalisation du dispositif de refroidissement.

La figure 4 représente ce deuxième mode de réalisation en coupe transversale.

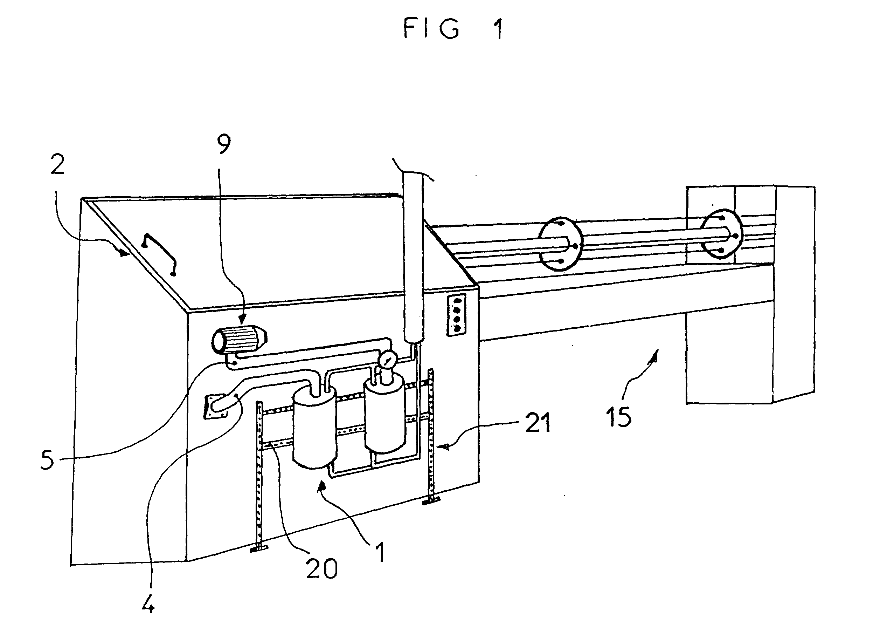

La présente invention concerne un dispositif de refroidissement pour machine-outil portant la référence générale (1) ; il comporte des moyens de refroidissement (MR) destinés à refroidir l'huile de coupe (3) des machines-outils (2). Selon l'invention, le dispositif de refroidissement (1) est autonome et est disposé ou monté sur les machines-outils (2) à l'extérieur de celle-ci. Ainsi, comme le montre la figure 1, le dispositif de refroidissement peut être disposé contre une machine outil (2) alimentée par son embarreur (15). De plus, il peut être avantageusement disposé à l'extérieur de la machine outil de manière amovible de manière à pouvoir être changé de place lors des changements de disposition de l'atelier.

Selon le mode de réalisation préféré du dispositif de refroidissement (1), celui-ci comporte des moyens de connexion (MC) lui permettant de venir se brancher sur le circuit d'huile de coupe (3) de la machine-outil (2). Ces moyens de connexion (MC) sont constitués par une canalisation d'admission (4) et une canalisation de sortie (5) par lesquelles est destinée à circuler respectivement l'huile de coupe chaude (3a) et l'huile de coupe refroidie (3b). Ces canalisations (4, 5) sont avantageusement réalisées en tuyau souple et déformable comme des flexibles afin de faciliter l'adaptation du dispositif de refroidissement (1) sur la machine-outil (2) ou à l'environnement de ladite machine-outil. Ainsi, le dispositif de refroidissement d'huile de coupe (1) peut être disposé à plusieurs endroits en fonction de la configuration de l'atelier dans lequel est installée la machine-outil. Il peut être, par exemple, fixé au bâti de la machine-outil directement, il peut également comme le montre la figure 1 être porté par un ensemble de cornières (20) formant un châssis ou une structure porteuse (21), ou être disposé sur le sol à proximité de ladite machine sans pour autant sortir du champ de protection de l'invention.

Les canalisations d'admission (4) et de sortie (5) du dispositif de refroidissement (1) sont destinées à se connecter au circuit d'huile de coupe (3) de la machine-outil (2) de manière à permettre la circulation de ladite huile de coupe (3) à l'intérieur du dispositif de refroidissement. Pour ce faire, le dispositif (1) présente un circuit interne d'huile de coupe destiné à prolonger le circuit d'huile de la machine outil, la circulation à l'intérieur du circuit d'huile interne (6) étant avantageusement obtenue grâce aux moyens de circulation du circuit d'huile de la machine-outil (2) c'est-à-dire grâce à sa pompe à huile (9). Ainsi, la canalisation d'admission (4) est connectée au bac de récupération de l'huile ou en aval de celui-ci afin d'admettre de l'huile de coupe chaude (3a) dans le dispositif tandis que la canalisation de sortie (5) est connectée à la pompe à huile (9) de la machine-outil (2) tel qu'illustré figure 1 pour lui fournir une huile de coupe (3b) dont la température (T) est comprise dans la plage de rendement optimum de l'huile de coupe (3) de la machine-outil (2).

Selon l'invention, le dispositif de refroidissement (1) comporte au moins une enceinte de refroidissement (6, 6a, 6b) ou réservoir dans laquelle l'huile de coupe chaude (3a) est amenée par la canalisation d'admission (4) et à l'intérieur de laquelle sont disposés les moyens de refroidissement (MR). Toutefois, pour certaines machines dont les besoins en huile de coupe sont importants, les dispositifs de refroidissement peuvent être constitués de deux enceintes successives (6a, 6b) ou plus dans lesquelles les moyens de refroidissement (MR) réalisent les échanges thermiques avec l'huile de coupe chaude (3a) pour la refroidir et amener sa température (T) dans la plage de rendement optimum.

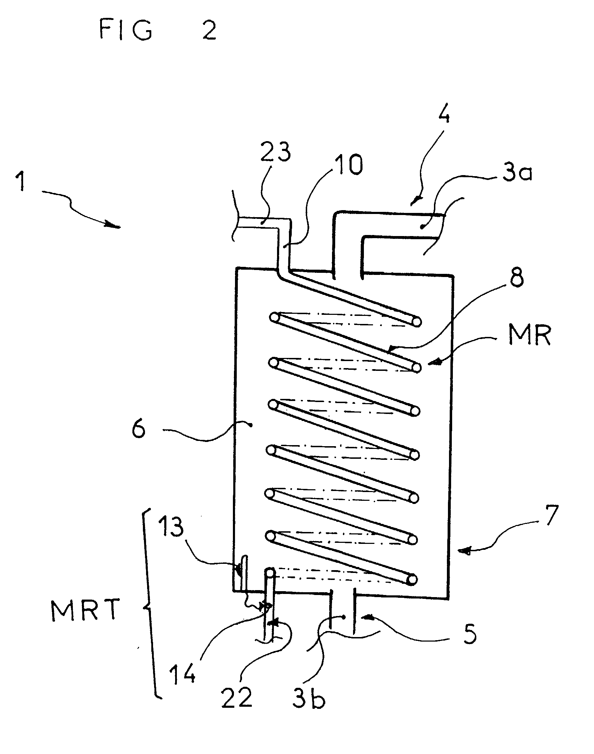

Selon un premier mode de réalisation du dispositif de refroidissement (1) illustré figure 2, celui-ci se présente sous la forme d'une enceinte (6) de forme sphérique cylindrique reliée par son extrémité supérieure à la canalisation d'admission (4) et à son extrémité inférieure à la canalisation de sortie (5). Les moyens de refroidissement (MR) sont avantageusement constitués par un circuit de refroidissement (8) disposé à l'intérieur de l'enceinte (6). Ce circuit de refroidissement (8) se présente sous la forme d'une spirale hélicoïdale formant un serpentin à l'intérieur duquel un fluide de refroidissement (10) comme, par exemple, de l'eau ou du gaz est destiné à circuler.

Selon ce premier mode de réalisation, le fluide de refroidissement est constitué par de l'eau, tel que de l'eau industrielle dont la température est suffisamment basse pour permettre le refroidissement de l'huile de coupe (3). Le circuit de refroidissement (8) est ainsi relié à une canalisation d'arrivée d'eau (22) positionnée à l'endroit où la canalisation de sortie (5) d'huile se connecte à l'enceinte de refroidissement (6), c'est-à-dire à son extrémité inférieure.

Le circuit de refroidissement (8) permet à l'extrémité supérieure où arrive l'huile de coupe chaude (3a) par la canalisation d'admission (4) d'évacuer l'eau (10) qui s'est réchauffée lors des échanges thermiques avec l'huile par une canalisation d'évacuation (23).

La circulation du fluide de refroidissement (10) s'effectue avantageusement à l'aide de la pression interne du circuit sur lequel il est connecté. Toutefois, il pourrait être prévu une pompe complémentaire destinée à permettre la circulation. Par ailleurs, ladite circulation pourrait être obtenue par gravitation en modifiant la configuration du dispositif et en reliant la canalisation d'arrivée (22) à l'extrémité supérieure de l'enceinte et la canalisation d'évacuation (23) à l'extrémité inférieure.

Selon l'invention, le dispositif de refroidissement possède des moyens de régulation (MRT) destinés à réguler la température de l'huile de coupe (3) à la sortie du dispositif afin qu'elle soit comprise dans la plage de rendement optimum. Ces moyens de régulation (MRT) sont avantageusement constitués par un capteur ou thermostat (13) destiné à commander la circulation du fluide de refroidissement (10) par l'intermédiaire d'une électrovanne (14).

Selon le mode de réalisation préféré du dispositif de refroidissement (1), le thermostat (13) est avantageusement disposé dans l'enceinte (6) à proximité de la canalisation de sortie (5). Ainsi, lorsque l'huile de coupe est à la température (T) voulue, le thermostat (13) commande l'arrêt de la circulation du fluide de refroidissement (10) dont la température à l'intérieur du circuit interne (8) tend à s'équilibrer avec la température (T) de l'huile de coupe (3).

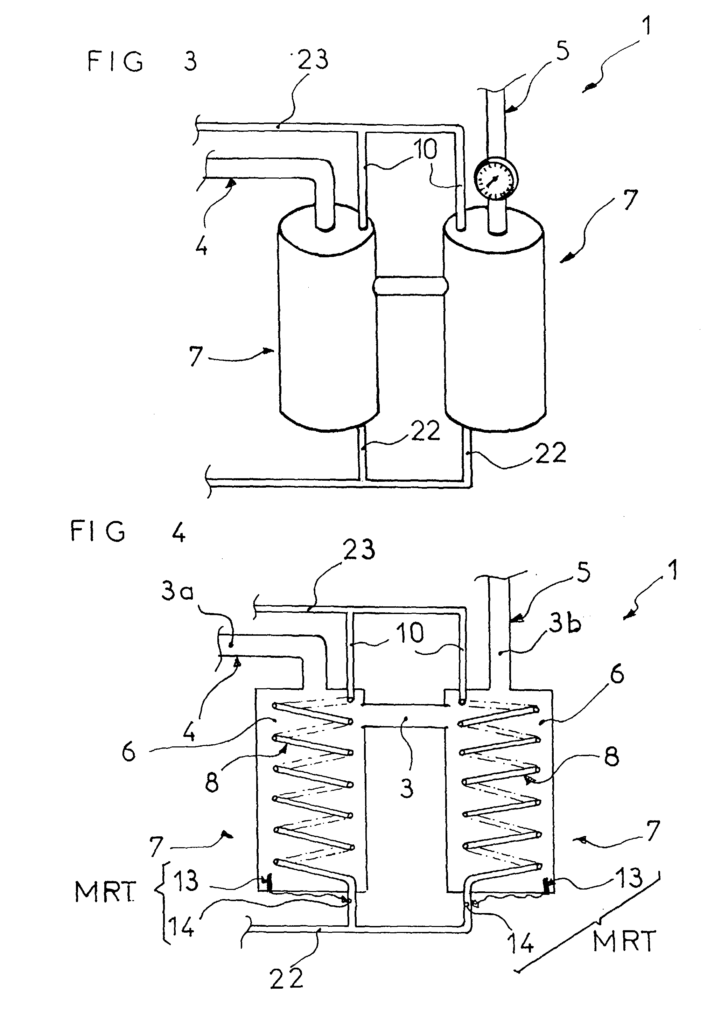

Selon un deuxième mode de réalisation du dispositif de refroidissement (1) illustré figures 1, 3 et 4, celui-ci comporte deux enceintes de refroidissement (6a, 6b) destinées à permettre l'obtention d'une température de l'huile de coupe comprise dans la plage de rendement optimum, et ce notamment pour des machines fonctionnant à des cadences élevées qui nécessitent un approvisionnement en huile de coupe plus important.

Ainsi, le volume d'huile de coupe (3) subissant les échanges thermiques avec les circuits de refroidissements internes respectifs (8a, 8b) est plus important. De plus, l'huile de coupe passant de la première enceinte de refroidissement (6a), où elle subit un premier abaissement de température, à la deuxième enceinte (6b), où elle subit également des échanges thermiques tendant à la refroidir, son passage dans le dispositif de refroidissement est plus long que dans le premier mode de réalisation et favorise ainsi son refroidissement.

Selon ce deuxième mode de réalisation, les circuits de refroidissements respectifs (8a, 8b) des enceintes (6a, 6b) sont indépendants et sont alimentés chacun en parallèle par une canalisation d'arrivée d'eau (22a, 22b). Ces circuits de refroidissement (8a, 8b) sont constitués chacun par une canalisation rigide réalisée de préférence dans un excellent conducteur thermique possédant de manière connue en soi la forme d'un serpentin.

La configuration du dispositif de refroidissement (1) de l'huile de coupe (3) des machines-outils (2) est destinée à permettre son adaptation à n'importe quelle machine-outil (2). Pour ce faire, il dispose de moyens de connexion avantageusement amovibles, constitués par des canalisations ou tuyaux flexibles munis d'un embout de connexion. Il comporte également des moyens de fixation destinés à permettre son installation sur le bâti (15) de la machine-outil de manière à générer le moins possible d'encombrement dans les ateliers. Notons, là aussi, que les moyens de fixation sont amovibles afin de permettre au dispositif de refroidissement d'être disposé puis enlevé de sa machine-outil (2) pour pouvoir être réinstallé sur une autre machine-outil.

Le dispositif de refroidissement (1) permet notamment à la machine-outil de disposer en permanence d'une huile de coupe dont la température est satisfaisante grâce à l'huile de coupe contenue dans la ou les enceinte(s) de refroidissement (6) qui joue le rôle de stock tampon.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif de refroidissement (1) de l'huile de coupe (3) d'une machine-outil (2) du type comportant des moyens de refroidissement (MR), caractérisé en ce qu'il comporte des moyens de connexion amovibles (MC) destinés à permettre son branchement sur le circuit d'huile de coupe (3) de la machine-outil (2) et son installation à l'extérieur de la machine outil (2).

2. Dispositif de refroidissement (1) de l'huile de coupe (3) d'une machine-outil (2) selon la revendication 1, caractérisé en ce que les moyens de connexion amovibles (MC) sont constitués par une canalisation d'admission (4) et une canalisation de sortie (5) réalisées en matière flexible.

3. Dispositif de refroidissement (1) de l'huile de coupe (3) d'une machine-outil (2) selon la revendication 2, caractérisé en ce que la canalisation d'admission (4) est destinée à être reliée au bac de récupération d'huile de la machine-outil (2) et la canalisation de sortie (5) à l'admission de la pompe à huile (9) de ladite machine-outil (2).

4. Dispositif de refroidissement (1) de l'huile de coupe (3) d'une machine-outil (2) selon l'une quelconque des revendications précédentes, caractérisé en ce qu'il comporte au moins une enceinte de refroidissement (6) à l'intérieur de laquelle sont disposés les moyens de refroidissement (MR).

5. Dispositif de refroidissement (1) de l'huile de coupe (3) d'une machine-outil (2) selon la revendication 4, caractérisé en ce qu'il comporte deux enceintes de refroidissement (6a, 6b) par lesquelles l'huile de coupe (3) passe successivement pour être refroidie.

6. Dispositif de refroidissement (1) de l'huile de coupe (3) d'une machine-outil (2) selon l'une quelconque des revendications précédentes, caractérisé en ce que les moyens de refroidissement sont réalisés par une ou plusieurs canalisations rigides disposées dans chaque enceinte et formant les circuits internes de refroidissement (8, 8a, 8b) dans lesquels circulent des fluides de réfrigération (10).

7. Dispositif de refroidissement (1) de l'huile de coupe (3) d'une machine-outil (2) selon la revendication 6, caractérisé en ce que le ou les fluides de réfrigération (10) sont constitués par de l'eau.

8. Dispositif de refroidissement (1) de l'huile de coupe (3) d'une machine-outil (2) selon la revendication 6 ou 7, caractérisé en ce qu'il comporte des moyens de régulation (MRT) de la température susceptibles de commander la circulation du(des) fluide(s) de réfrigération (10) à l'intérieur des circuits internes de refroidissements (8, 8a, 8b).

9. Dispositif de refroidissement (1) de l'huile de coupe (3) d'une machine-outil (2) selon la revendication 8, caractérisé en ce que les moyens de régulation (MRT) sont constitués par un thermostat (13) disposé dans la ou les enceinte(s) de refroidissement (6, 6a, 6b) et une électrovanne (14) commandée par le thermostat (13) destinée à gérer la circulation du fluide (10) à l'intérieur du circuit de refroidissement (8, 8a, 8b).
